# EUROPEAN PATENT APPLICATION

(11) **EP 4 311 997 A2**
(43) Date of publication of application: **31.01.2024**
(21) Application number: 23187375.3
(22) Date of filing: 24.07.2023
(51) Int. Cl.: G01B 5/30, G01B 5/00, G01N 3/08

(54) **CROSS-FLEXURE AND FLEXURE ELEMENT FOR AN EXTENSOMETER**

(30) Priority: 26.07.2022 US 202263392334 P; 18.07.2023 US 202318354383
(71) Applicant: MTS Systems Corporation, Eden Prairie, MN 55344 (US)
(72) Inventor: ROGOTZKE, Riley August, Eden Prairie, 55344 (US); MEYER, Richard, Eden Prairie, 55344 (US)
(74) Representative: HGF

(57) **Abstract**

An extensometer structure comprising a first extension arm having a first mount configured to support a first specimen engaging member and a second extension arm having a second mount configured to support a second specimen engaging member. A cross-flexure assembly is formed between the first extension arm and the second extension arm remote from the first mount and the second mount. The cross-flexure assembly may include a first flexure and a second flexure each joined to and extending between the first extension arm and the second extension arm. The second flexure is orthogonal to the first flexure to form a pivot axis, the second flexure extending only on one lateral side of the first flexure from the first extension arm to the second extension arm and the first flexure extending only on one lateral side of the second flexure from the first extension arm to the second extension arm.

## Description

### CROSS-REFERENCE TO RELATED APPLICATION(S)

This application is a Non-Provisional Application that claims the benefit of the Provisional Application Serial No. 63/392,334, filed July 26, 2022, which is hereby incorporated by reference in its entirety.

### BACKGROUND

The discussion below is merely provided for general background information and is not intended to be used as an aid in determining the scope of the claimed subject matter.

Extensometers are commonly used for measuring strain in a test specimen. Numerous forms of extensometers have been advanced in the art. One type of extensometer utilizes two extension arms held together by a cross-flexure assembly. Flexure members of the cross-flexure assembly form a pivot access that allows the extensometers to pivot with respect to each other to measure strain in a test specimen. Commonly, one of the flexure members includes two flexure elements separated by a slot. The other flexure member extends through the slot. Although this form of extensometer functions quite well, improvements can be made such as but not limited to reducing manufacturing cost.

### SUMMARY

This Summary and the Abstract herein are provided to introduce a selection of concepts in a simplified form that are further described below in the Detailed Description. This Summary and the Abstract are not intended to identify key features or essential features of the claimed subject matter, nor are they intended to be used as an aid in determining the scope of the claimed subject matter. The claimed subject matter is not limited to implementations that solve any or all disadvantages noted in the Background.

One general aspect includes an extensometer structure comprising a first extension arm having a first mount configured to support a first specimen engaging member and a second extension arm having a second mount configured to support a second specimen engaging member. A cross-flexure assembly is formed between the first extension arm and the second extension arm remote from the first mount and the second mount. The cross-flexure assembly may include a first flexure and a second flexure each joined to and extending between the first extension arm and the second extension arm. The second flexure is orthogonal to the first flexure to form a pivot axis, the second flexure extending only on one lateral side of the first flexure from the first extension arm to the second extension arm and the first flexure extending only on one lateral side of the second flexure from the first extension arm to the second extension arm.

Implementations may include one or more of the following features. The first flexure may include a first planar center portion and the second flexure may include a second planar center portion, the pivot axis extending at least proximate the first planar center portion and the second planar second portion. Each end of the first flexure remote from the first planar center portion can be wider than the first planar center portion in a direction parallel to the pivot axis. Each end of the second flexure remote from the second planar center portion can be wider than the second planar center portion in the direction parallel to the pivot axis. Ends of the first flexure joined to the first extension arm and the second extension arm can extend at least partially across and on opposite planar sides of the second planar center portion. Ends of the second flexure joined to the first extension arm and the second extension arm can extend at least partially across and on opposite planar sides of the first planar center portion.

A plurality of strain elements can be joined to the first flexure. Each strain element has electrically conductive ends joined to the first planar center portion and electrically conductive terminal pads are joined to the first flexure remote from the electrically conductive ends. A plurality of electrical wires individually electrically connect a terminal pad to one of the electrically conductive ends. The terminal pads preferably are joined to the first flexure remote from the first planar center portion as such in a portion of the first flexure that does not exhibit much if any strain. Each end of the first flexure is thicker than the first planar center portion in a direction normal to the first planar center portion.

Another general aspect includes an extensometer structure comprising a first extension arm having a first mount configured to support a first specimen engaging member and a second extension arm having a second mount configured to support a second specimen engaging member. A cross-flexure assembly is formed between the first extension arm and the second extension arm remote from the first mount and the second mount. The cross-flexure assembly includes a first flexure may include only a single first body joined to and extending between the first extension arm and the second extension arm; and a second flexure may include only a single second body joined to and extending between the first extension arm and the second extension arm and orthogonal to the first flexure to form a pivot axis, the second body of the second flexure extending only on one side of the first body of the first flexure from the first extension arm to the second extension arm and the first body of the first flexure extending only on one side of the second body of the second flexure from the first extension arm to the second extension arm.

Yet another general aspect includes an extensometer comprising a first extension arm having a first mount configured to support a first specimen engaging member and a second extension arm having a second mount configured to support a second specimen engaging member. A cross-flexure assembly is formed between the first extension arm and the second extension arm remote from the first mount and the second mount. The cross-flexure assembly includes a first flexure joined to and extending between the first extension arm and the second extension arm, the flexure having a first planar center portion between opposite ends. A second flexure is joined to and extends between the first extension arm and the second extension arm and orthogonal to the first flexure to form a pivot axis. A plurality of strain elements is joined to the first planar center portion, where each strain element has electrically conductive ends joined to the first planar center portion and electrically conductive terminal pads are joined to the first flexure remote from the electrically conductive ends. A plurality of electrical wires individually electrically connect a terminal pad to one of the electrically conductive ends.

Yet another general aspect includes an extensometer structure comprising a first extension arm having a first mount configured to support a first specimen engaging member and a second extension arm having a second mount configured to support a second specimen engaging member. A cross-flexure assembly is formed between the first extension arm and the second extension arm remote from the first mount and the second mount,. The cross-flexure assembly includes a first flexure comprising only a single first body joined to and extending between the first extension arm and the second extension arm. A second flexure includes only a single second body joined to and extending between the first extension arm and the second extension arm parallel to and spaced apart from the first flexure. A third flexure includes only a single third body joined to and extending between the first extension arm and the second extension arm and orthogonal to the first flexure to form a first pivot axis with the first body and orthogonal to the second flexure to form a second pivot axis. The third flexure is disposed between the first flexure and the second flexure and has a third planar center portion formed between opposed ends.

Implementations may include one or more of the following features. The first extension arm comprises a first longitudinal axis, while a second extension arm comprises a second longitudinal axis that together define a common plane that intersects with the third body. Preferably, the common plane bisects the third body. One end of the first flexure can be joined to one end of the second flexure and opposite ends of the first flexure and the second flexure are spaced apart so as to form a u-shaped structure.

A plurality of strain elements can be joined to the third flexure. Each strain element has electrically conductive ends joined to a third planar center portion and electrically conductive terminal pads are joined to the third flexure remote from the electrically conductive ends. A plurality of electrical wires individually electrically connects a terminal pad to one of the electrically conductive ends. The terminal pads preferably are joined to the third flexure remote from the third planar center portion as such in a portion of the third flexure that does not exhibit much if any strain. Each end of the third flexure is thicker than the third planar center portion in a direction normal to the third planar center portion.

In any of the foregoing aspects, the flexure to which strain elements are mounted are preferably disposed on a center portion that is thinner than each of the ends, and a tapered section connects each of the ends to the center planar portion. Terminal pads are disposed on one of the ends, and an electrical wire connects each of the terminal pads to a strain element, the wire extending over the tapered section.

### BRIEF DESCRIPTION OF THE DRAWINGS

FIG. 1 is a perspective view of an exemplary extensometer.
FIG. 2 is a second perspective view of the extensometer of FIG. 1.
FIG. 3 is a perspective view of a cross-flexure assembly as viewed along arrow 3 in FIG. 2 with all other elements of the extensometer removed.
FIG. 4 is a second perspective view of the cross-flexure assembly as viewed along arrow 4 in FIG. 2 with all other elements of the extensometer removed.
FIG. 5 is a front view of a flexure having strain elements.
FIG. 6 is a right-side elevational view of the flexure of FIG. 5 with elements removed.
FIG. 7 is a perspective view of a second exemplary extensometer.
FIG. 8 is a second perspective view of the extensometer of FIG. 7 with elements of the extensometer removed.

### DETAILED DESCRIPTION OF THE DRAWINGS

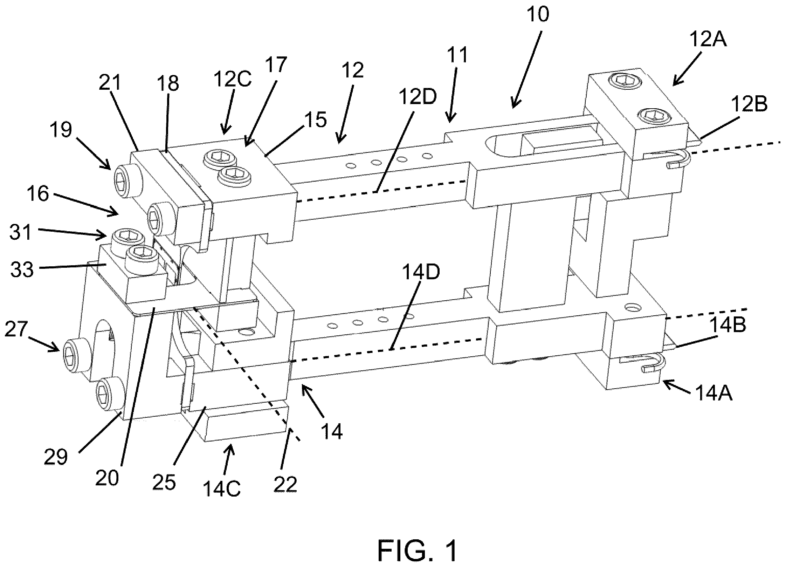

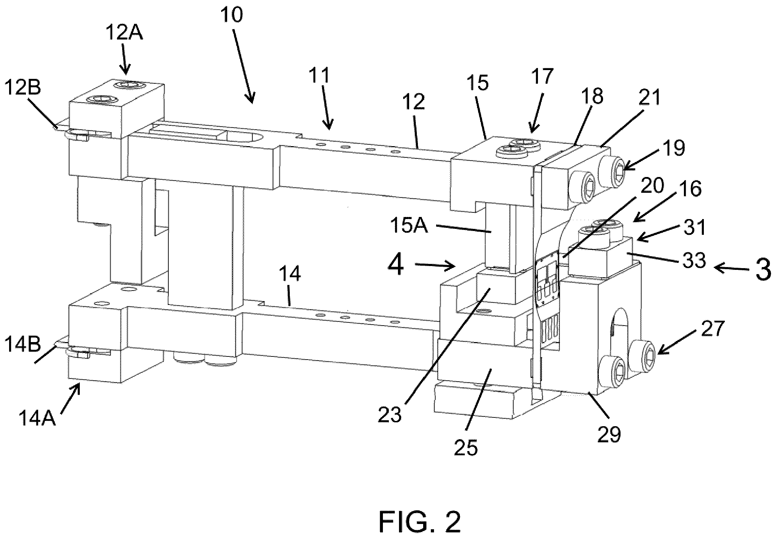

An embodiment of an extensometer structure having aspects of the present invention is illustrated in FIGS. 1 and 2 at 10. The extensometer 10 includes an extensometer structure 11. As used here in "extensometer structure" means at least some of the interconnected mechanical components and does not include any sensing device for measuring movement of the components of the extensometer structure. Rather, various types of sensing devices can be used with the extensometer structure disclosed herein to form an operable extensometer that provides an output signal indicative of displacement such as elongation of a test specimen.

The extensometer structure 11 includes a first extension arm 12 and a second extension arm 14 connected together at remote ends by a cross-flexure assembly 16. The first extension arm 12 includes a mount 12A on an end of the extension arm 12 remote from the cross-flexure assembly 16. Similarly, the second extension arm 14 includes a mount 14A on an end remote from the cross-flexure assembly 16. The mounts 12A, 14A are configured to hold specimen engaged devices, herein illustrated as knife elements 12B, 14B; however, the mounts 12A, 14A and the knife elements 12B, 14B should not be considered limiting in that the mounts 12A, 14A can be configured to hold other end devices such as, but not limited to, elongated rods or other forms of specimen engaging devices.

The cross-flexure assembly 16 formed between and connecting the first extension arm 12 with the second extension arm 14 remote from the first mount 12A and the second mount 14A includes a first flexure 18 and a second flexure 20. Each of the flexures 18, 20 are connected between or connect the extension arms 12, 14 together; however, the second flexure 20 is mounted such that the second flexure 20, which is generally planar, is orthogonal to the first flexure 18, which is also generally planar, so as to form a pivot axis 22. A flexure mount 12C is provided on the first extension arm 12, while a second flexure mount 14C is provided on extension arm 14. Each of the flexure mounts 12C, 14C are configured to secure one end of each of the flexures 18, 20 to extension arms 12, 14, respectively. Flexure mount 12C includes a base support 15 that includes a standoff 15A herein joined with fasteners 17 to base support 15; however, standoff 15A can be integral to base support 15 being formed from a single unitary body, if desired. Fasteners 19 extend through apertures in a block 21 and apertures in flexure 18 to secure one end of the flexure 18 to the base support 15, while similar fasteners, not shown, extend through apertures in block 23 and apertures in one end of flexure 20 to secure the end of the flexure 22 to standoff 15A.

Flexure mount 14C performs the same function as flexure mount 12C but secures the opposite ends of flexures 18 and 20 to extension arm 14. In the embodiment illustrated, flexure mount 14C includes a base support 25. Fasteners 27 extend through apertures in a block 29 to secure one end of the flexure 18 to the base support 25. Fasteners 31 extend though apertures in a block 33 to secure one end of flexure 20 to block 29. It should be noted that the flexure mounts 12C, 14C should not be considered limiting in that flexure mounts 12C, 14C can comprise other elements or configurations so as to secure ends of the flexures 18, 20 to extension arms 12, 14.

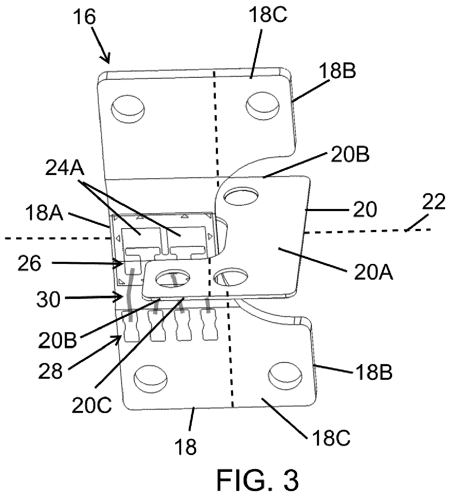

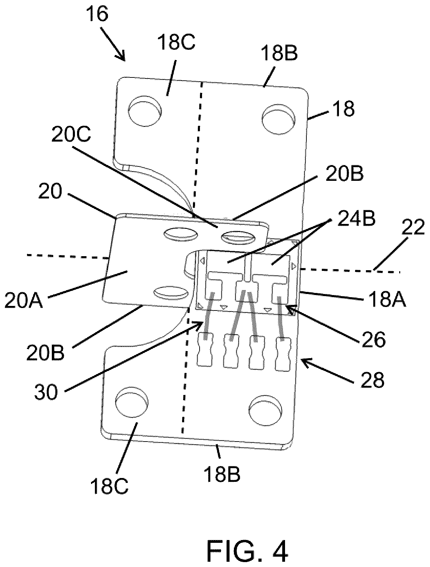

The flexures 18 and 20 of the cross-flexure assembly 16 are isolated from the other elements of extensometer 10 and illustrated in FIGS. 3 and 4. An aspect of the invention comprises the second flexure 20 extending only on one lateral side of the first flexure 18 from the extension arm 12 to the extension arm 14 and likewise, the first flexure 18 extending only on one lateral side of the second flexure 20 from the first extension arm 12 to the second extension arm 14. Unlike extensometers of the prior art where one of the flexures extends through a slot formed in the other flexure, each of the flexures 18 and 20 comprise a single body devoid of any formed slot in the flexure that is joined to and extends between the extension arms 12, 14.

Another way of describing the structure of the cross-flexure assembly 16 is that the flexures 18, 20 are asymmetrically configured with respect to the extension arms 12, 14. For instance, if each of the extension arms 12, 14 are considered to have central or longitudinal axes 12D, 14D as illustrated in FIG. 1, then a common plane having axes 12D, 14D extends through the flexure mounts 12C, 14C and cross-flexure assembly 16 such that the single body of flexure 18 is predominantly on one side of the common plane, while the single body of flexure 20 is on the opposite side of the common plane. Referring back to FIGS. 3 and 4, the single body of flexure 18 comprises a planar center portion 18A having opposed ends 18B used to mount the flexure 18 to the extension arms 12,14. In the embodiment illustrated each end 18B is wider than the planar center portion 18A in a direction parallel to pivot axis 22. Similarly, in a preferred embodiment, the second flexure 20 includes a planar center portion 20A that is wider than each end 20B of the flexure 20 that are used to mount the flexure 20 to the extension arms 12, 14. Each end 20B of the second flexure 20 is wider than the planar center portion 20A in the direction parallel to the pivot axis 22. The pivot axis 22 extends at least proximate, if not through, the planar center portions 18A, 20A. So as to keep the width of the cross-flexure assembly 16 as narrow as possible in the direction parallel to the pivot axis 22. In the embodiment illustrated so as to keep the width of the extensometer structure 11 narrow, each of the flexures 18, 20 are asymmetrical. Ends 18B of the flexure 18 are joined to the first extension arm 12 and the second extension arm 14 such that portions 18C extend partially across or over and on opposite planar sides of the second of the planar center portion 20A. Similarly, ends 20B of the flexure 20 are joined to the first extension arm 12 and the second extension arm 14 and have portions 20C that extend at least partially across or over and on opposite planar sides of the planar center portion 18A. Stated yet another way, the extending portions 18C,20C of ends 18B,20B extend through the common plane of axes 12D,14D.

As is known in the art, various sensing devices can be used to measure displacement of the extension arms 12, 14 toward and away from each other. Such sensing devices can include, but not limited to, capacitive sensors, optical sensors, resistive sensors, etc. In the embodiment illustrated, strain sensors secured to one of the flexures, herein flexure 18, comprise another aspect of the present invention.

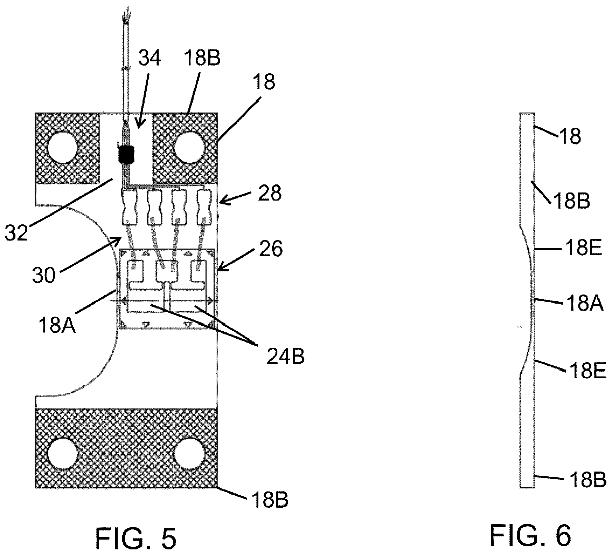

The strain elements comprise a first set of strain elements 24A joined to one surface of the planar center portion 18A (FIG. 3), while a second pair of strain elements 24B are joined to an opposite surface of the planar center portion 18A (FIG. 4). The strain elements 24A, 24B are connected in a Wheatstone bridge, not shown, as is well known in the art; however, the manner in which electrical conductors are electrically connected to the strain elements 24A, 24B has been improved. Referring to FIGS. 3-6, the strain elements 24A, 24B are joined to the center portion 18A which is preferably thinner than each of the ends 18B (FIG. 6), where a tapered section 18E connects each of the ends 18B to the center planar portion 18A. Each strain element 24A, 24B has a pair of electrically conductive ends 26 which are joined to the planar center portion 18A. Terminal pads 28 spaced apart from each other and spaced apart from the conductive ends 26 are joined to the flexure 18, preferably on a planar surface of one of the ends 18B. Individual electrical wire conductors 30 electrically connect a terminal pad of the set of terminal pads 28 to at least one of the electrically conductive ends 26 of the strain elements 24A, 24B, extending over the tapered section 18E. The advantage of this design is that the terminal pads 28 are mounted to the end portion of the flexure 18 that does not experience strain or very little strain with bending of the flexure 18. Hence, both the electrically conductive ends 26 and the terminal pads 28 are preferably mounted on separate planar surfaces, but importantly the terminal pads 28 are located on a portion of the flexure 18 that does not exhibit much, if any, strain when the extensometer arms 12, 14 move relative to each other as the flexure 18 flexes. In the embodiment illustrated, each end 18B of the flexure 18 is thicker than the planar center portion 18A in a direction normal to the planar center portion 18A. Typically, flexure 20 does not have any strain elements mounted thereon and can be made, if desired, with uniform thickness in the center portion 20A and the ends 20B.

Each of the wire connectors 30 extend between the associated electrical connectors 26 and terminal pads 28, but a center portion of the electrically conductive wires 30 are spaced apart from the flexure 18. Referring to FIG. 5, a second set of electrical wire conductors 30 are electrically connected to the terminal pads 28 and extend away from the flexure 18 herein through a gap 34 provided between contact portions of the block 21 and the flexure 18 illustrated in FIG. 5 with hatched lines. The electrical wire conductors 34 can be bonded or otherwise secured to the flexure 18, as desired.

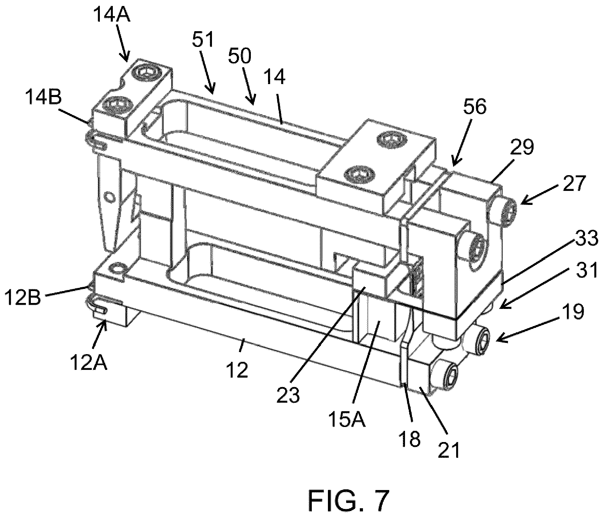

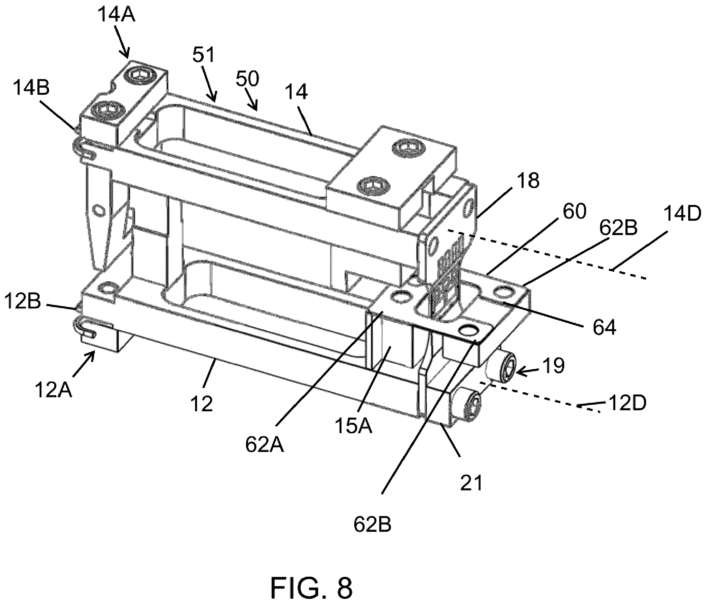

FIGS. 7 and 8 illustrate a second extensometer 50 having extensometer structure 51. Elements having the same or similar function as found in extensometer 10 are identified with the same reference numbers. In this embodiment, cross-flexure assembly 56 comprises flexures 18' and 60. Flexure 18' has the same construction as that in cross-flexure 16 with the advantageous structure of flexure 18 described above. However, a planar center portion 18A' in flexure 18' can be centered along a longitudinal midline 18D' from one end 18B' to the other end 18B'as opposed to the center portion 18A being shifted laterally away from the longitudinal midline 18D (Fig. 5) as is in flexure 18 of Fig. 5 to one side.

In the extensometer 50, the single body flexure 18' is between parallel flexure elements 62 of flexure 60. The parallel and spaced apart flexure elements 62 balance the loading on cross-flexure assembly 56 so as to help ensure movement of the arms in a plane. It can be advantageous to keep the width of the extensometer narrow, but also have sufficient width for the strain gauges 24A,24B of the centrally located flexure 18'. In this embodiment, the flexure 60 is U-shaped having one end 62A that connects the ends of flexure elements 62 together, while the other ends 62B of flexure elements 62 are separated from each other, providing a gap 64 therebetween. Such a structure allows the flexure 18' to be located between the flexure elements 62 during assembly by inserting the flexure 18' through the slot 64. The U-shape of flexure 60 is advantageous over separate flexure elements 62 because the end 62A maintains the parallel orientation of the longitudinal lengths of the flexure elements 62, which helps maintain the correct operation of the cross-flexure assembly 56, for instance, such that the width of the flexure elements 62 through which the pivot axis extends is the same.

Although the subject matter has been described in language directed to specific environments, structural features and/or methodological acts, it is to be understood that the subject matter defined in the appended claims is not limited to the environments, specific features or acts described above as has been held by the courts. Rather, the environments, specific features and acts described above are disclosed as example forms of implementing the claims.

## Claims

1. An extensometer structure comprising:
a first extension arm having a first mount configured to support a first specimen engaging member;
a second extension arm having a second mount configured to support a second specimen engaging member; and
a cross-flexure assembly formed between the first extension arm and the second extension arm remote from the first mount and the second mount, the cross-flexure assembly comprising:
a first flexure joined to and extending between the first extension arm and the second extension arm; and
a second flexure joined to and extending between the first extension arm and the second extension arm and orthogonal to the first flexure to form a pivot axis, the second flexure extending only on one lateral side of the first flexure from the first extension arm to the second extension arm and the first flexure extending only on one lateral side of the second flexure from the first extension arm to the second extension arm.

2. The extensometer structure of claim 1, wherein the first flexure comprises a first planar center portion and the second flexure comprises a second planar center portion, the pivot axis extending at least proximate the first planar center portion and the second planar second portion.

3. The extensometer structure of claim 2, wherein each end of the first flexure remote from the first planar center portion is wider than the first planar center portion in a direction parallel to the pivot axis, preferably wherein each end of the second flexure remote from the second planar center portion is wider than the second planar center portion in the direction parallel to the pivot axis, more preferably wherein ends of the first flexure joined to the first extension arm and the second extension arm extend at least partially across and on opposite planar sides of the second planar center portion, and more preferably wherein ends of the second flexure joined to the first extension arm and the second extension arm extend at least partially across and on opposite planar sides of the first planar center portion.

4. The extensometer structure of claim 2 and further comprising strain elements joined to the first planar center portion, and wherein each strain element has electrically conductive ends joined to the first planar center portion and electrically conductive terminal pads are joined to the first flexure remote from the electrically conductive ends, and wherein a plurality of electrical wires individually electrically connect a terminal pad to one of the electrically conductive ends, for example wherein a first strain element has electrically conductive ends joined to the first planar center portion and electrically conductive terminal pads are joined to the first flexure remote from the electrically conductive ends, and wherein an electrical wire electrically connects each terminal pad to at least one of the electrically conductive ends, and preferably, wherein the terminal pads are joined to the first flexure remote from the first planar center portion.

5. The extensometer structure of claim 4, wherein each end of the first flexure is thicker than the first planar center portion in a direction normal to the first planar center portion.

6. An extensometer structure comprising:
a first extension arm having a first mount configured to support a first specimen engaging member;
a second extension arm having a second mount configured to support a second specimen engaging member; and
a cross-flexure assembly formed between the first extension arm and the second extension arm remote from the first mount and the second mount, the cross-flexure assembly comprising:
a first flexure being only a single first body joined to and extending between the first extension arm and the second extension arm; and
a second flexure being only a single second body joined to and extending between the first extension arm and the second extension arm and orthogonal to the first flexure to form a pivot axis, the second body of the second flexure extending only on one side of the first body of the first flexure from the first extension arm to the second extension arm and the first body of the first flexure extending only on one side of the second body of the second flexure from the first extension arm to the second extension arm.

7. An extensometer comprising:
a first extension arm having a first mount configured to support a first specimen engaging member;
a second extension arm having a second mount configured to support a second specimen engaging member; and
a cross-flexure assembly formed between the first extension arm and the second extension arm remote from the first mount and the second mount, the cross-flexure assembly comprising:
a first flexure joined to and extending between the first extension arm and the second extension arm, the first flexure having a first planar center portion between opposite ends;
a second flexure joined to and extending between the first extension arm and the second extension arm and orthogonal to the first flexure to form a pivot axis;
a plurality of strain elements joined to the first planar center portion, and wherein each strain element has electrically conductive ends joined to the first planar center portion and electrically conductive terminal pads are joined to the first flexure remote from the electrically conductive ends; and a plurality of electrical wires, wherein each electrical wire individually electrically connects one of the terminal pads to one of the electrically conductive ends.

8. The extensometer of claim 7, wherein a first strain element has electrically conductive ends joined to the first planar center portion and electrically conductive terminal pads are joined to the first flexure remote from the electrically conductive ends, and wherein an electrical wire electrically connects each terminal pad to at least one of the electrically conductive ends.

9. The extensometer of claim 7, wherein the first planar center portion is thinner than each of the ends, and wherein a tapered section connects each of the ends to the first planar center planar portion, wherein the terminal pads are disposed on one of the ends, and wherein the electrical wires extend over the tapered section.

10. The extensometer of claim 9, wherein the second flexure is U-shaped.

11. An extensometer structure comprising:
a first extension arm having a first mount configured to support a first specimen engaging member;
a second extension arm having a second mount configured to support a second specimen engaging member; and
a cross-flexure assembly formed between the first extension arm and the second extension arm remote from the first mount and the second mount, the cross-flexure assembly comprising:
a first flexure comprising only a single first body joined to and extending between the first extension arm and the second extension arm;
a second flexure comprising only a single second body joined to and extending between the first extension arm and the second extension arm parallel to and spaced apart from the first flexure; and
a third flexure comprising only a single third body joined to and extending between the first extension arm and the second extension arm and orthogonal to the first flexure to form a first pivot axis with the first body and orthogonal to the second flexure to form a second pivot axis, the third flexure being disposed between the first flexure and the second flexure and having a third planar center portion formed between opposed ends.

12. The extensometer structure of claim 11, wherein a first extension arm longitudinal axis and a second extension arm longitudinal axis define a common plane that intersects with the third body.

13. The extensometer structure of claim 12, wherein the common plane bisects the third body.

14. The extensometer structure of claim 11 and further comprising a first strain element having electrically conductive ends joined to the third planar center portion and at least one electrically conductive terminal pad is joined to the third flexure remote from the electrically conductive ends, and wherein an electrical wire electrically connects the at least one electrically conductive terminal pad to one of the electrically conductive ends.

15. The extensometer structure of claim 12, wherein one end of the first flexure is joined to one end of the second flexure and opposite ends of the first flexure and the second flexure are spaced apart so as to form a U-shaped structure.
